Europäisches Patentamt

European Patent Office

Office européen des brevets

(19)

(11) Veröffentlichungsnummer: **0 109 509**
**B1**

(12) # EUROPÄISCHE PATENTSCHRIFT

(45) Veröffentlichungstag der Patentschrift:
02.04.86

(21) Anmeldenummer: 83109497.4

(22) Anmeldetag: 23.09.83

(51) Int. Cl.⁴: **H 01 H 11/04, B 23 K 26/06**

(54) Verfahren und Vorrichtung zum Justieren von Kontaktfedern in einem Relais.

(30) Priorität: 27.09.82 DE 3235714

(43) Veröffentlichungstag der Anmeldung:
30.05.84 Patentblatt 84/22

(45) Bekanntmachung des Hinweises auf die Patenterteilung:
02.04.86 Patentblatt 86/14

(84) Benannte Vertragsstaaten:
AT BE CH DE FR GB IT LI NL SE

(56) Entgegenhaltungen:
DE - A - 2 918 100
US - A - 3 908 110

ELECTRONIC ENGINEERING, Band 49, Nr. 594, Juli 1977, Seiten 53-54, London, GB "Functional adjustment using laser trimming"

(73) Patentinhaber: Siemens Aktiengesellschaft, Berlin und München Wittelsbacherplatz 2, D-8000 München 2 (DE)

(72) Erfinder: Steiger, Erwin, Dipl.-Phys., Bingener Strasse 20, D-8000 München 50 (DE)
Erfinder: Hering, Bernhard, Dr. Dipl.-Phys., Plattlinger Strasse 61, D-8000 München 71 (DE)

# Beschreibung

Die Erfindung bezieht sich auf ein Verfahren zum Justieren von Kontaktfedern in einem Relais, wobei durch eine örtliche, dosierte Wärmeaufbringung, insbesondere mittels eines Laserimpulses, eine definierte Stellungsänderung der jeweiligen Kontaktfeder erzielt wird. Ausserdem bezieht sich die Erfindung auf eine Vorrichtung zur Durchführung dieses Verfahrens.

Ein derartiges Verfahren ist bereits aus der DE-A Nr. 2918100 bekannt. Dort ist bereits beschrieben, wie beispielsweise mittels eines Laserimpulses ein definierter Verzug an Kontaktfedern oder anderen zu justierenden Teilen erzielt wird. Auch ist dort bereits darauf hingewiesen, dass durch Anwendung verschiedener Geometrien der aufgebrachten Schmelzzonen mittels des Laserstrahls unterschiedlich starke Verformungen der Feder hervorgerufen werden können. Schliesslich ist dort auch bereits die Verwendung von Umlenkeinrichtungen, wie Spiegeln, für die Laserstrahlung erwähnt.

Aufgabe der Erfindung ist es, dies bekannte Prinzip weiterzuentwickeln, um ein Verfahren zu schaffen, mit dem auf möglichst schnelle und einfache Weise in einem Relais montierte Kontaktfedern genau eingestellt werden können, wobei dieses Verfahren insbesondere in einer industriellen Massenfertigung von Relais einsetzbar sein soll. Weiterhin soll mit der Erfindung eine Vorrichtung zur Durchführung dieses Verfahrens geschaffen werden.

Erfindungsgemäss wird die genannte Aufgabe mit einem Verfahren der eingangs genannten Art dadurch gelöst, dass für die einzelnen Punkte eines auf der Kontaktfederoberfläche auswählbaren Matrixfeldes die bei Bestrahlung dieser Punkte mit einem Wärmeimpuls, insbesondere einem Laserimpuls, bei vorgegebener Impulsenergie, Pulslänge und vorgegebenem Fokusdurchmesser erzielbaren Korrekturwerte für die Kontaktfederstellung gespeichert werden, dass die Stellung der zu justierenden Kontaktfeder im Vergleich zu einer Sollstellung gemessen und ihre Abweichung ermittelt wird, dass die Abweichung mit den gespeicherten Korrekturwerten verglichen wird und dass diejenigen Korrekturwerte ausgewählt werden, deren Summe höchstens der Abweichung entspricht, und dass die den ausgewählten Korrekturwerten entsprechenden Matrixpunkte auf der Kontaktfederoberfläche mit einer den vorgegebenen Wärmeimpuls erzeugenden Vorrichtung angesteuert und bestrahlt werden.

Beim erfindungsgemässen Verfahren werden also nicht für jede Kontaktfeder je nach deren gewünschter Verbiegung völlig neue und eigene Bestrahlungspunkte mit eigener Geometrie ermittelt und bestrahlt, sondern es ist für alle zu justierenden Relais bzw. Kontaktfedern ein einheitliches Matrixfeld vorgegeben, wobei jeder Punkt dieses Matrixfeldes mit einem Wärmestrahl, insbesondere einem Laserstrahl vorgegebener Pulsenergie, Pulslänge und Fokusdurchmessers bestrahlt werden kann. Für jeden Punkt des Matrixfeldes ist dabei der erzielbare Korrekturwert vorher bestimmt und für alle kommenden Justiervorgänge gespeichert, so dass durch Vergleich der zu korrigierenden Abweichung mit den erzielbaren Korrekturwerten jeweils schnell diejenigen Punkte des Matrixfeldes ausgewählt werden können, deren Bestrahlung mit dem Laserstrahl in Summe die gewünschte Korrektur in optimaler Annäherung ergibt. Da jeder Laserimpuls an dem entsprechend angesteuerten Punkt der Kontaktfeder eine bestimmte Winkeländerung ergibt, ist die Veränderung des kontakttragenden freien Endes der Kontaktfeder umso grösser, je näher der bestrahlte Punkt an der Einspannstelle der Feder liegt. Innerhalb des Matrixfeldes können daher durch Auswahl und Bestrahlung verschiedener Punkte kleinere und grössere Korrekturwerte als Wegänderungen des freien Kontaktfederendes erzielt und miteinander kombiniert werden. Durch die zweidimensionale Gestaltung des Matrixfeldes ist es auch möglich, gegebenenfalls eine Verbiegung der Kontaktfeder um zwei Achsen vorzunehmen, was beispielsweise bei Brückenkontaktfedern in Betracht kommt. Die Reduzierung der für die Bestrahlung mit einem Laserimpuls auswählbaren Fläche auf einzelne, verhältnismässig wenige Punkte des Matrixfeldes ermöglicht eine sehr schnelle Auswahl und Ansteuerung, was für die Massenfertigung von Relais ein entscheidender Vorteil ist.

Da die Reproduzierbarkeit der beim Justieren erreichten Hubänderung für jeden einzelnen Matrixpunkt einen bestimmten, insbesondere durch die jeweilige Beschaffenheit der Kontaktfederoberfläche bedingten Toleranzbereich aufweist und sich diese Toleranzbereiche summieren können, ist es zweckmässig, nach einer Bestrahlung der ausgewählten Punkte die Stellung der Kontaktfeder gegenüber der Sollstellung erneut zu messen und gegebenenfalls weitere Korrekturwerte auszuwählen sowie die zugehörigen Punkte auf der Kontaktfederoberfläche zu bestrahlen, wenn die ermittelte Abweichung einen vorgegebenen Toleranzwert übersteigt.

Die einzelnen Punkte des Matrixfeldes auf der Kontaktfederoberfläche können durch optische Ablenkung des von einer einzigen Wärmequelle erzeugten Energiestrahls angesteuert werden. Ausserdem können durch optische Ablenkung dieses Energiestrahls, vorzugsweise eines Laserstrahls, mehrere Kontaktfedern in einem Relais bestrahlt werden.

Bekanntlich ergibt die Bestrahlung eines bestimmten Punktes eine Krümmung der Feder um diesen Punkt herum, solange die Feder vorspannungsfrei angeordnet ist. Durch Anlegen einer Vorspannung, beispielsweise durch Anlegen der Feder an einem Gegenkontakt, lässt sich die durch Bestrahlung eines Punktes erzielbare Verbiegung der Feder verstärken oder bei entsprechend grosser Vorspannung in Gegenrichtung umkehren.

Zur Messung der Kontaktfederstellung wird zweckmässigerweise eine elektrooptische Aufnahmeeinrichtung verwendet, welche deren freies Ende und/oder — je nach Messverfahren — ein ihr zugeordnetes Funktionselement des Relais, also im allgemeinen den Anker, abtastet. So kann beispielsweise in einem statischen Messverfahren bei einer mechanisch festgelegten Mittelstellung des Ankers die Mittelstellung einer Kontaktfeder zwischen zwei Gegenkontakten abgetastet bzw. eine Abweichung von dieser Mittelstellung gemessen werden.

Besonders vorteilhaft ist eine dynamische Messung, d.h. die Erfassung der Kontaktfederstellung während einer Schaltbewegung. In diesem Fall wird jeweils die Ankerstellung im Augenblick des Öffnens oder Schliessens eines Kontaktes festgestellt. Die Strecke zwischen der Ankerstellung im Augenblick des Öffnens bzw. Schliessens des Kontaktes und der Endlage des Ankers ist der Überhub, der die Kontaktkraft bestimmt. Durch Justierung der Kontaktfeder wird dieser Überhub dann auf das vorgesehene Mass eingestellt. Zweckmässigerweise wird in diesem Fall der Anker im Augenblick der elektrooptischen Aufnahme mit einem Lichtblitz beleuchtet, um eine hohe Positionsgenauigkeit der schnelle bewegten Teile zu erreichen.

Zur Positionierung der Wärmequelle bzw. einer optischen Ablenkeinrichtung für den Laserstrahl ist es weiterhin vorteilhaft, vor Beginn der Justierung die Kontur der Kontaktfeder mit einem Lichtstrahl in Verbindung mit einem Lichtempfänger abzutasten. Zu dieser Abtastung kann zweckmässigerweise ein weiterer Laser verwendet werden, der kollinear zu dem ersten, die Wärmeimpulse erzeugenden Laser angeordnet ist und eine wesentlich geringere Energie als dieser abstrahlt.

Vorteilhaft für die Federjustierung ist es ausserdem, dass die Kontaktfeder eine wechselnde Dicke aufweist, wobei der mit den Justierimpulsen bestrahlte Teil dicker ist als das zur Kontaktgabe dienende freie Federende.

Eine Vorrichtung zur Durchführung des erfindungsgemässen Verfahrens besitzt eine Aufnahmevorrichtung zur Positionierung des zu justierenden Relais, eine Messeinrichtung zur Abtastung der Kontaktfederstellung, eine erste Vergleichseinrichtung zum Vergleich der Kontaktfederstellung mit einer gespeicherten Sollstellung und zur Bildung eines Abweichungswertes, einen Korrekturwertspeicher zur Aufnahme von bestimmten Punkten eines Matrixfeldes zugeordneten Korrekturgrössen, eine zweite Vergleichseinrichtung, welcher der ermittelte Abweichungswert und die gespeicherten Korrekturgrössen zugeführt werden, eine Wärmestrahlungsimpulse erzeugende Einrichtung, insbesondere einen Laser, sowie eine Ablenkeinrichtung, welche in Abhängigkeit von den Ausgangssignalen der zweiten Vergleichseinrichtung auf bestimmte Punkte der zu justierenden Kontaktfeder einstellbar ist.

Die Aufnahmevorrichtung dient dabei zur richtigen Positionierung des zu justierenden Relais gegenüber der Messeinrichtung und gegenüber der Ablenkeinrichtung für den Laserstrahl. Ausserdem kann die Aufnahmevorrichtung auch dazu verwendet werden, das Relais während des Messvorgangs anzusteuern, um während der Ankerbewegung Messungen durchführen zu können. Zu diesem Zweck enthält die Aufnahmevorrichtung vorzugsweise eine Anordnung zur Kontaktierung der Anschlussstifte des Relais. Über eine Schalteinrichtung kann dann an die Erregerwicklung des Relais angelegt werden, wobei beim Öffnen oder Schliessen des Kontaktes der zu justierenden Kontaktfeder die Messeinrichtung ausgelöst wird.

Als Messeinrichtung dient in einer Ausführungsform eine Halbleiter-Bildaufnahmeeinrichtung, wobei über ein Linsensystem der abzutastende Bereich des Relais auf einem Zeilen-CCD-Sensor abgebildet wird. Zur Hervorhebung der Hell-Dunkel-Kontraste bei der statischen Abtastung ist zweckmässigerweise ausserdem eine Lichtquelle vorgesehen, deren Licht über Lichtleiterbündel auf die abzutastenden Relaisteile gerichtet wird. Bei der dynamischen Messung wird zweckmässigerweise ein Stroboskop zur Erzeugung eines Lichtblitzes im Augenblick der Abtastung verwendet.

Die Vergleichseinrichtungen und die Speicher werden zweckmässigerweise durch einen Mikroprozessor gebildet. Als Wärme-Energiequelle wird ausserdem in einer bevorzugten Ausführungsform ein Pulslasersystem verwendet, dessen Strahl über einen um zwei Achsen schwenkbaren Spiegel auf die einzelnen Punkte des Matrixfeldes auf der zu justierenden Kontaktfeder einstellbar ist. Im Strahlengang des Wärmestrahls bzw. Laserstrahls wird ausserdem vorzugsweise eine verstellbare Fokussieroptik angeordnet. In weiterer Ausgestaltung ist zu beiden Seiten der Relais-Aufnahmeeinrichtung je ein Spiegel vorgesehen, während im Strahlengang des Laserstrahls oder Wärmestrahls eine verstellbare Umlenkeinrichtung vorgesehen ist, durch die der Strahl wahlweise auf den einen oder den anderen Spiegel einstellbar ist. Diese Umlenkeinrichtung kann zweckmässigerweise ein verschiebbares Prisma mit verspiegelten Seitenflächen besitzen.

Um im Fertigungsbetrieb die Reproduzierbarkeit der Justierung sicherzustellen, müssen die bestrahlten Punkte des Matrixfeldes auf der Kontaktfederoberfläche möglichst genau positioniert werden. Zu diesem Zweck ist in einer weiteren Ausgestaltung der Erfindung zusätzlich zur Wärmeerzeugungseinrichtung ein weiterer Mess-Laser, dessen Strahlengang kollinear zum Wärmestrahl liegt, sowie neben der Relais-Aufnahmeeinrichtung ein Lichtempfänger vorgesehen, welcher bei bestimmter Reflexion des Messlaserstrahls ein Signal zur Nullpunktsbestimmung für die Ablenkeinrichtung gegenüber der Relaisaufnahmeeinrichtung abgibt.

Die Erfindung wird nachfolgend an Ausführungsbeispielen anhand der Zeichnung näher erläutert. Es zeigt

Fig. 1 ein Blockschaltbild einer Vorrichtung zur Durchführung des erfindungsgemässen Justierverfahrens,

Fig. 2 und 3 eine Anordnung zur statischen Messung der Kontaktfederstellung vor dem Justieren,

Fig. 4, 5 und 6 schematische Darstellungen der Positionen von Anker und Kontaktfeder beim Schalten des Relais,

Fig. 7 ein Relais mit einer zu justierenden Kontaktfeder in Seitenansicht,

Fig. 8 die Justieranordnung für ein Relais nach Fig. 2 in Vorderansicht,

Fig. 9 und 10 eine Anordnung zur Kantenerkennung der zu justierenden Kontaktfedern in zwei Ansichten (schematisch),

Fig. 11 eine etwas abgewandelte Ausführungsform einer Justiereinrichtung mit Ablenkeinrichtung für den Laserstrahl sowie verstellbarer Fokussiereinrichtung.

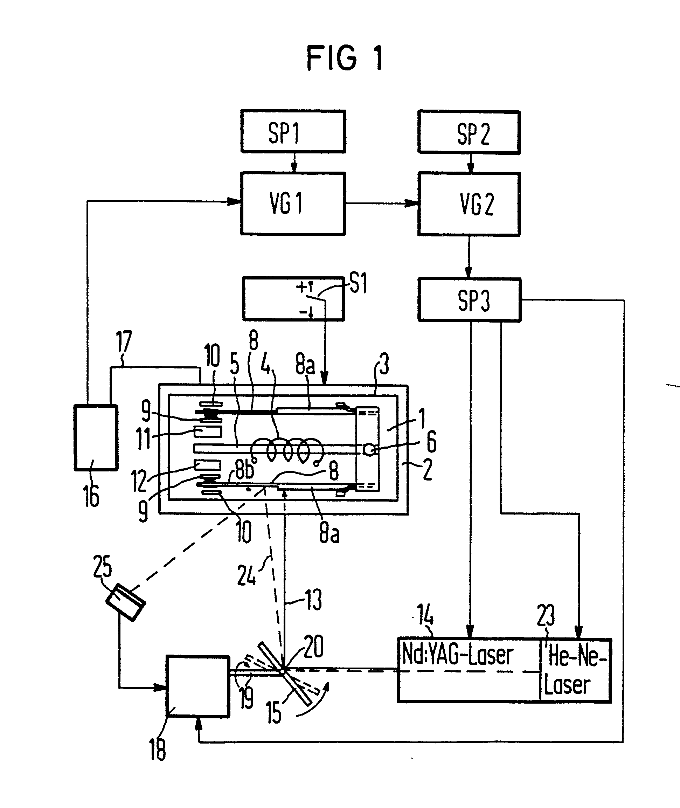

Fig. 1 zeigt in einem Blockschaltbild die Anordnung der einzelnen Einrichtungen für die Justierung eines Relais. Das Relais 1 ist auf einer Aufnahmevorrichtung 2 angeordnet, die das Relais in eine genau vorgegebene Position bringt und eine Kontaktierungsvorrichtung für die Anschlussstifte des Relais besitzt. Das Relais nach dem vorliegenden Beispiel besitzt etwa einen Aufbau, wie er in der DE-A Nr. 3132239 beschrieben ist. In Fig. 1 ist das Relais 1 in Draufsicht ohne Kappe gezeigt, wobei wesentliche Teile schematisch dargestellt sind. Auf einem flachen Grundkörper 3 sitzt ein nicht dargestellter Spulenkörper mit einer schematisch gezeigten Wicklung 4, innerhalb welcher ein langgestreckter Anker 5 um Lagerzapfen 6 schwenkbar gelagert ist. Die Lagerzapfen 6 sind an einem Lagerelement 7 angeformt, welches mit dem Anker 5 fest verbunden ist und zu beiden Seiten des Ankers jeweils eine Kontaktfeder 8 trägt. Diese Kontaktfedern 8 besitzen einen dickeren, zur Justierung dienenden Abschnitt 8a und tragen an ihren dünneren freien Enden 8b jeweils ein Kontaktstück, welches beim Schalten des Ankers wahlweise Kontakt mit einem der beiden Gegenkontaktelemente 9 bzw. 10 gibt. Der Anker 5, der in Mittellage gezeichnet ist, liegt in seinen Endlagen jeweils wahlweise an einem Polblech 11 oder 12 an.

Die mit dem Anker über ihre Einspannung festverbundenen Kontaktfedern 8 müssen in jeder Endlage des Ankers mit einer bestimmten Vorspannung an den jeweiligen Gegenkontaktelementen 9 bzw. 10 anliegen. D.h., dass sie bei Mittellage des Ankers ebenfalls in Mittellage zwischen ihren beiden Gegenkontakten liegen sollen, und dass zur Erzeugung einer ausreichenden Kontaktkraft die Kontakte jeweils geschlossen werden müssen, bevor der Anker seine Endlage erreicht hat. Wenn die Kontaktfedern 8 in ihrer erwähnten Relativposition von der Sollstellung abweichen, müssen sie justiert werden. Dies geschieht mit einem Laserimpuls 13, der von einem Nd:YAG-Pulslasersystem (Neodym:Yttrium-Aluminium-Granat) 14 erzeugt wird. Über einen um zwei Achsen schwenkbaren Ablenkspiegel 15 kann der Laserstrahl 13 auf verschiedene Punkte der Kontaktfeder 8 gerichtet werden, was später noch erläutert wird.

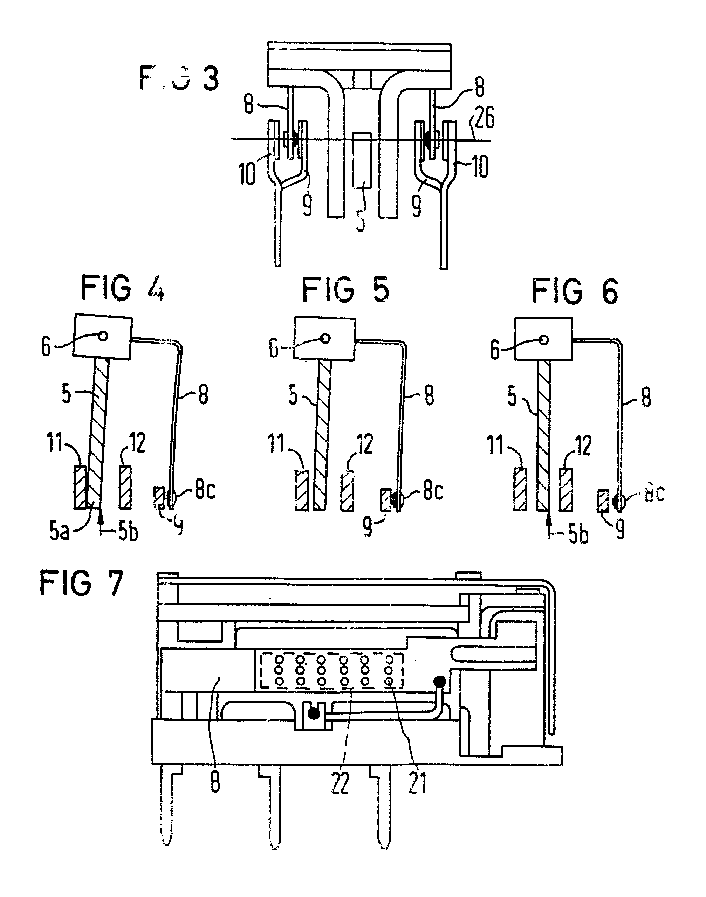

Für die Justierung der Kontaktfedern 8 muss zunächst deren Abweichung gegenüber dem Sollwert gemessen werden. Gemäss Fig. 1 ist hierzu eine optische Messvorrichtung, beispielsweise eine CCD-Kamera 16 vorgesehen, welche die Stellung des Ankers 5 und gegebenenfalls der Kontaktfedern 8 optisch festhält, so dass daraus deren Abweichung von einer Sollstellung ermittelt werden kann. Das erhaltene Bild wird in der Messeinrichtung 16 ausgewertet, wobei die jeweils gemessene Position des Ankers oder gegebenenfals der Kontaktfedern 8 einer Vergleichseinrichtung VG1 zugeführt und dort mit den im Speicher SP1 gespeicherten Sollwerten verglichen werden. Ergibt der Vergleich einen Abweichungswert, so wird dieser einer zweiten Vergleichseinrichtung VG2 zugeführt und dort mit Korrekturwerten verglichen, die im Speicher SP2 gespeichert sind. Diese Korrekturwerte sind jeweils bestimmten Punkten eines Matrixfeldes zugeordnet, was bedeutet, dass bei Bestrahlung des betreffenden Punktes auf der Kontaktfederoberfläche der zugeordnete Korrekturwert für die Kontaktfeder erzielbar ist. Durch die Vergleichseinrichtung VG2 werden diejenigen Punkte des Matrixfeldes ausgewählt, deren zugeordnete Korrekturwerte in ihrer Summe zumindest annähernd der gemessenen Abweichung entsprechen. Ist die Justierung der Kontaktfedern nur in einer Richtung möglich, so muss sichergestellt werden, dass die Korrekturwerte auch bei Berücksichtigung der Toleranzen die Grosse der Abweichung nicht übersteigt. Die ausgewählten Matrixpunkte werden einem weiteren Speicher SP3 eingegeben und zur Ansteuerung des Lasers 14 sowie der Ablenkeinrichtung 15 über eine Ablenksteuerung 18 verwendet. Die Ablenksteuerung 18 bewirkt eine Drehung des Spiegels 15 um die Achse 19 und um die Achse 20, so dass der Laserstrahl 13 jeweils auf die ausgewählten Punkte 21 (siehe Fig. 7) der Kontaktfeder 8 eingestellt werden kann.

In Fig. 7 ist ein Relais 1 in Seitenansicht gezeigt, auf dessen Kontaktfeder 8 die ansteuerbaren Matrixpunkte 21 in einem Justierbereich (Matrixfeld) 22 andeutungsweise gezeichnet sind. In dem angegebenen Beispiel ist eine Matrix von 3×6 Justierpunkten 21 gezeigt, wobei je nach Entfernung der einzelnen Justierpunkte von der Einspannstelle der Kontaktfeder 8 eine unterschiedliche Justierwirkung erzielbar ist.

Um für die Ansteuerung der einzelnen Justierpunkte 21 eine definierte Ausgangslage zu erhalten und damit in der Serienfertigung die Korrekturwerte reproduzierbar zu machen, ist gemäss Fig. 7 ein zusätzlicher Pilotlaser 23 vorgesehen, welcher vor dem eigentlichen Justiervorgang aktiviert wird. Über den Ablenkspiegel 15 wird der Strahl 24 des Justierlasers 23, der kollinear zum Energielaser 14 angeordnet ist, über die Kanten der Kontaktfeder 8 gewobbelt, wobei der reflektierte Strahl über eine lichtempfindliche Diode 25 empfangen und ausgewertet wird. Dadurch kann die Lage der Kontaktfederkonturen exakt ermittelt und über entsprechende Signale in die Ablenksteuerung 18 eingegeben werden. Ausgehend von einer durch die Kontaktfederkonturen gegebenen Nullage kann dann der Ablenkspiegel 15 auch exakt auf die gewünschten Justierpunkte 21 gerichtet werden. In Abwandlung könnte die Nullage der Kontaktfeder vom Lichtempfänger 25 auch beispielsweise in

den Speicher SP3 eingegeben und dort in die Koordinaten für die ausgewählten Matrixpunkte eingerechnet werden.

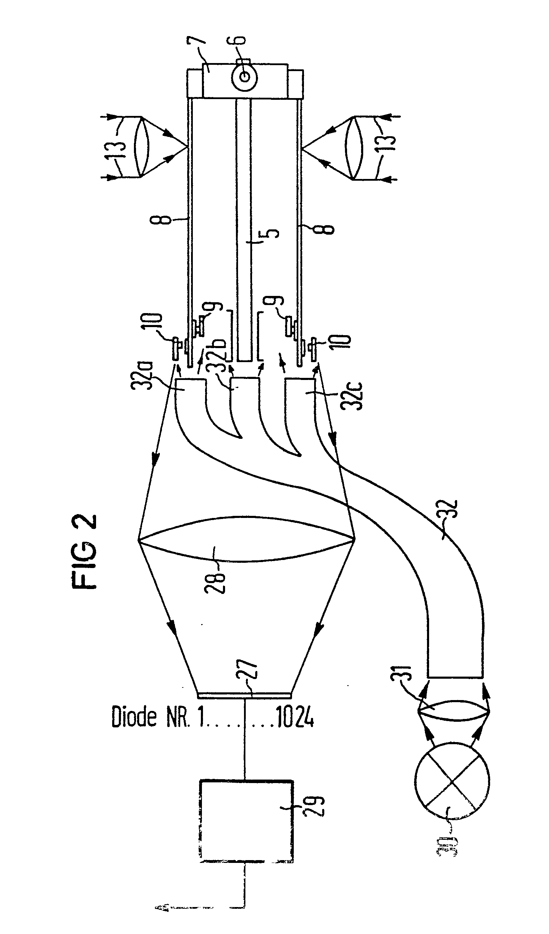

Fig. 2 zeigt eine Anordnung zur statischen Messung der Kontaktfederstellung mit Hilfe der optischen Messvorrichtung 16. Bei dieser statischen Messung wird der Anker 5 in Mittellage gebracht und beispielsweise durch mechanische Mittel dort festgehalten. Dann wird festgestellt, ob bei dieser Mittellage des Ankers auch die Mittelkontaktfedern 8 jeweils in Mittellage zwischen ihren jeweiligen Gegenkontaktelementen 9 und 10 liegen. Dabei genügt eine optische Abtastung entlang einer Linie 26 in Fig. 3. Zur optischen Signalaufnahme dient eine handelsübliche CCD-Kamera mit einer CCD-Diodenzeile 27, einer Objektivlinse 28 und einer hier nicht weiter zu beschreibenden Auswerteelektronik 29.

Zur Messung wird das Licht einer Strahlungsquelle 30 mit konstanter Ausgangsleistung (z.B. einer geregelten Kaltlichtquelle, von Leuchtdioden oder Laserdioden) zur individuellen Ausleuchtung der beiden Kontaktsysteme mit den Kontaktfedern 8 und des Ankers 5 über eine Linse 31 sowie ein Lichtleiterbündel 32 bzw. deren aufgespaltene Enden 32a, 32b und 32c auf die drei Messorte lokal verteilt. Dies dient zur Kontrastanpassung für die Halbleiterkamera. Mit dem Linsensystem wird dann auf den Zeilen-CCD-Sensor 27 der gesamte Messbereich abgebildet. Ergibt sich aus der Auswertung, dass die Kontaktfedern beispielsweise entsprechend der Darstellung in Fig. 2 bei Mittelstellung des Ankers 5 jeweils an den Gegenkontaktelementen 9 anliegen, so müssen sie durch Bestrahlung mit dem Laserstrahl 13 so weit nach aussen justiert werden, dass sie in der Mitte zwischen den Gegenkontaktelementen 9 und 10 stehen.

Eine besonders vorteilhafte Messmethode besteht jedoch darin, das Relais 1 beim Messvorgang zu schalten, so dass die Ankerstellung jeweils in dem Augenblick gemessen werden kann, in welchem ein Kontakt geöffnet oder geschlossen wird. Zum Zweck dieses dynamischen Messverfahrens ist bei der Anordnung in Fig. 1 ein Schalter S1 vorgesehen, welcher an die Relaiswicklung 4 abwechselnd Spannung der einen und der anderen Polarität anlegt, so dass der Anker des (polarisierten) Relais 1 einmal in beiden Richtungen umschaltet. Über eine Leitung 17 kann dabei der Schaltzustand der Kontakte in der Aufnahmevorrichtung 2 abgegriffen und der Kamera 16 als Signal zugeführt werden, so dass jeweils im Augenblick des Schliessens oder Öffnens eines Kontakts ein Bild des Relais aufgenommen wird.

Das Prinzip dieser dynamischen Messung ist in den Fig. 4 bis 6 schematisch dargestellt. Es sei angenommen, dass das Relais ebenso aufgebaut ist wie in den Fig. 2 und 3 dargestellt. Der Anker 5 ist mit einer oder zwei Mittelkontaktfedern 8 im Bereich seiner Lagerung 6 fest verbunden und kann mit seinem freien Ende 5a zwischen den beiden Polblechen 11 und 12 hin und her geschaltet werden. Fig. 4 zeigt den Zustand in der einen Endlage des Ankers, wobei also dieser mit seinem freien Ende 5a am Polblech 11 anliegt und der Kontakt 8c der Kontaktfeder 8 mit maximaler Kontaktkraft am Gegenkontaktelement 9 anliegt. Die Kontaktfeder 8 ist dabei stark durchgebogen. In diesem Zustand wird die Position des Ankers, d.h. seiner Kante 5b gemessen.

Beim Schalten des Relais entfernt sich der Anker 5 vom Joch, während der Kontakt bei verminderter Kontaktkraft noch geschlossen ist (siehe Fig. 5). Die Mittelfeder ist dabei noch geringfügig durchgebogen. Bei weiterer Bewegung des Ankers wird der Zeitpunkt erreicht, zu dem das Kontaktstück 8c vom Gegenkontaktelement 9 abhebt, also der Kontakt öffnet. Dieser Zeitpunkt des Kontaktöffnens wird für die Aufnahme eines weiteren Bildes verwendet; dabei wird also wiederum die Stellung des Ankers, nämlich seiner Kante 5b, gemessen (Fig. 6). Aus der Differenz der beiden Ankerpositionen von Fig. 4 (Anker liegt an) und Fig. 6 (Kontakt öffnet) wird der Überhub bestimmt, mit einem Sollwert verglichen und zur Bestimmung des Korrekturwertes ausgewertet.

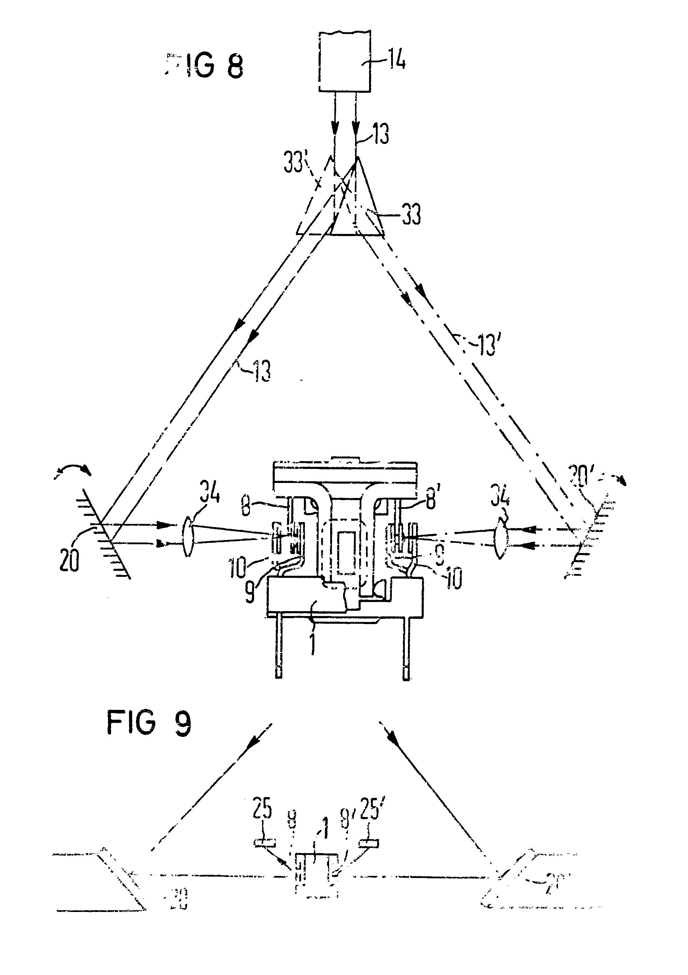

Fig. 8 zeigt die Anordnung zur Justierung zweier an gegenüberliegenden Seiten des Relais angeordneter Kontaktfedern 8 bzw. 8'. Der Strahl 13 des Pulslasers 14 wird über ein Prisma 33 mit verspiegelten Seitenflächen auf den Spiegel 20 gelenkt, der, wie beschrieben, um zwei Achsen schwenkbar ist. Vom Spiegel 20 wird der Laserstrahl 13 dann über ein Linsensystem 34 auf den jeweils gewünschten Justierpunkt auf der Kontaktfeder 8 fokussiert. Soll nun die gegenüberliegende Kontaktfeder 8' justiert werden, so wird das Prisma 33 in die gestrichelt dargestellte Stellung 33' verschoben, so dass der Laserstrahl 13 auf der entgegengesetzten Seitenfläche auftrifft und als Justierimpuls 13' über den Spiegel 20' und die Fokussierlinse 34' auf die Kontaktfeder 8' gelenkt wird. Damit können mit einem einzigen Pulslaser 14 beide Kontaktfedern 8 und 8' justiert werden.

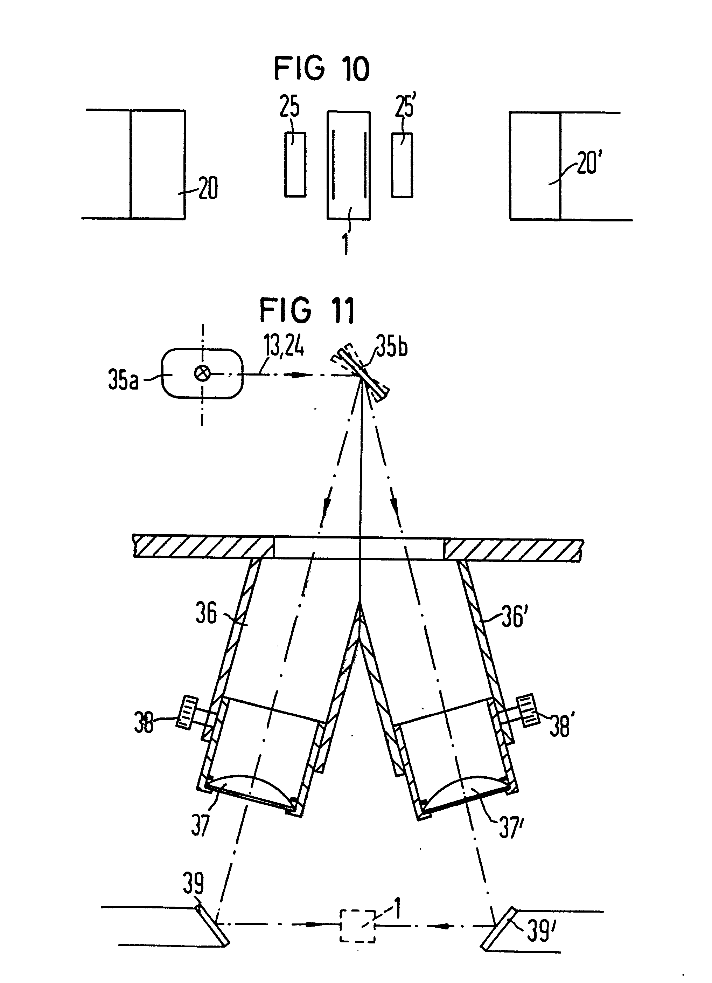

Fig. 9 zeigt in Vorderansicht und Fig. 10 in Draufsicht die schematische Anordnung zur Lageerkennung des zu justierenden Relais 1 bzw. der hier nicht weiter dargestellten Kontaktfedern. Zur Lageerkennung dient ein Pilotlaser 23 (siehe Fig. 1), beispielsweise ein Helium-Neon-Laser. Dessen Laserstrahl 24 wird über ein Prisma 33 (Fig. 8) einmal auf den Umlenkspiegel 20 und einmal auf den Umlenkspiegel 20' gelenkt, von wo er dann im ersten Fall auf die linke Seite und im zweiten Fall auf die rechte Seite des Relais fällt, wo er von der Kontaktfeder 8 bzw. 8' reflektiert wird. Neben dem Relais 1 sind ausserdem zwei Fotodioden 25 und 25' angeordnet.

Der Strahl des He-Ne-Lasers, der kollinear zum Strahl des Nd:YAG-Pulslasers verläuft, wird vor dem Justiervorgang über die obere Kante der Kontaktfeder 8 bzw. 8' gewobbelt, wobei das gestreute Licht dieser Kante mit der Fotodiode 25 bzw. 25' gemessen wird. Durch die spezielle Anordnung der Fotodioden ist eine exakte Messung der Strahllage bezüglich der Koordinaten der Ablenkeinrichtung 15 (Fig. 1) für den nachfolgenden Justiervorgang gewährleistet.

Fig. 11 zeigt in Abwandlung zu Fig. 8 eine etwas geänderte Umlenkeinrichtung für die Laserstrahlen. In diesem Fall fallen die kollinearen Strahlen der beiden Laser 14 und 23 auf die um zwei zueinander senkrechte Achsen schwenkbaren Ablenkspiegel 35a und 35b und werden von dort zu einer der beiden Fokussieroptiken 36 bzw. 36' gelenkt. Jede dieser Fokussieroptiken besitzt eine Linse 37 bzw. 37', die über eine Stellschraube 38 bzw 38' verstellbar ist. Von der Fokussieroptik 36 bzw. 36' fällt der Laserstrahl auf einen der Umlenkspiegel 39 .zw. 39' und von dort auf das Relais 1 bzw. auf eine Kontaktfeder an einer Seite des Relais. Durch die Verstellung der Linse 37 bzw. 37' kann der Strahldurchmesser auf der Federoberfläche und damit der erzielte Schmelzdurchmesser auf der Feder verändert werden. Ist das System jedoch einmal eingestellt, so bleibt für die laufende Fertigung der Relais der eingestellte Laserimpuls nach Pulsenergie, Pulslänge und Fokusdurchmesser unverändert, so dass die darauf beruhenden und eingespeicherten Korrekturwerte für die einzelnen Matrixpunkte reproduzierbar sind.

## Patentansprüche

1. Verfahren zum Justieren von Kontaktfedern in einem Relais, wobei durch eine örtliche, dosierte Wärmeaufbringung, insbesondere mittels eines Laserimpulses, eine definierte Stellungsänderung der jeweiligen Kontaktfeder erzielt wird, dadurch gekennzeichnet, dass für die einzelnen Punkte eines auf der Kontaktfederoberfläche auswählbaren Matrixfeldes (22) die bei Bestrahlung dieser Punkte mit einem Wärmeimpuls bei vorgegebener Pulsenergie, Pulslänge und vorgegebenem Fokusdurchmesser erzielbaren Korrekturwerte für die Kontaktfederstellung gespeichert werden, dass die Stellung der zu justierenden Kontaktfeder (8) im Vergleich zu einer Sollstellung gemessen und ihre Abweichung ermittelt wird, dass die Abweichung mit den gespeicherten Korrekturwerten verglichen wird und dass diejenigen Korrekturwerte ausgewählt werden, deren Summe höchstens der Abweichung entspricht, und dass die den ausgewählten Korrekturwerten entsprechenden Matrixpunkte (21) auf der Kontaktfederoberfläche mit einer den vorgegebenen Wärmeimpuls erzeugenden Vorrichtung angesteuert und bestrahlt werden.

2. Verfahren nach Anspruch 1, dadurch gekennzeichnet, dass nach einer Bestrahlung der ausgewählten Punkte (21) die Stellung der Kontaktfeder (8) gegenüber der Sollstellung erneut gemessen und dass erneut Korrekturwerte ausgewählt und die zugehörigen Punkte auf der Kontaktfederoberfläche bestrahlt werden, wenn die ermittelte Abweichung einen vorgegebenen Toleranzwert übersteigt.

3. Verfahren nach Anspruch 1 oder 2, dadurch gekennzeichnet, dass die einzelnen Justierpunkte (21) durch optische Ablenkung des von einer einzigen Wärmequelle (14) erzeugten Energiestrahls angesteuert werden.

4. Verfahren nach einem der Ansprüche 1 bis 3, dadurch gekennzeichnet, dass mehrere Kontaktfedern (8, 8') in einem Relais durch optische Ablenkung des von einer einzigen Wärmequelle (14) erzeugten Energiestrahls (13) angesteuert werden.

5. Verfahren nach einem der Ansprüche 1 bis 4, dadurch gekennzeichnet, dass am freien Ende der Kontaktfeder (8) während des Justiervorgangs eine Vorspannung in Richtung des Energiestrahls oder in entgegengesetzter Richtung anliegt.

6. Verfahren nach einem der Ansprüche 1 bis 5, dadurch gekennzeichnet, dass zur Messung der Kontaktfederstellung deren freies Ende zusammen mit zugeordneten anderen Funktionselementen (5) des Relais (1) über eine elektrooptische Aufnahmeeinrichtung (16) erfasst wird.

7. Verfahren nach Anspruch 6, dadurch gekennzeichnet, dass zur Ermittlung des Korrekturwertes jeweils die Stellung des Ankers (5) im Augenblick des Offnens und/oder Schliessens eines Kontaktes ausgewertet wird.

8 Verfahren nach Anspruch 7, dadurch gekennzeichnet, dass der Anker (5) im Augenblick der Abtastung mit einem Lichtblitz beleuchtet wird.

9. Verfahren nach Anspruch 6, dadurch gekennzeichnet, dass zur Ermittlung des Korrekturwertes jeweils der Anker (5) in eine Mittelstellung gebracht und dann die Relativstellung der Kontaktfedern (8) zu ihren Gegenkontaktelementen (9, 10) optisch gemessen wird.

10. Verfahren nach einem der Ansprüche 1 bis 9 dadurch gekennzeichnet dass zur Positionierung der Wärmequelle (14) bzw. einer optischen Ablenkeinrichtung (15) die Kontur der Kontaktfeder mit einem Lichtstrahl (24) in Verbindung mit einem Lichtempfänger (25) abgetastet wird

11 Verfahren nach Anspruch 10, dadurch gekennzeichnet, dass zur Abtastung ein Pilotlaser (23) verwendet wird, dessen Strahl kollinear zum Strahl eines ersten, die Wärmeimpulse erzeugenden Lasers (14) angeordnet ist und eine wesentlich geringere Energie als dieser besitzt

12. Verfahren nach einem der Ansprüche 1 bis 11. dadurch gekennzeichnet, dass im Relais Kontaktfedern mit abgestuft ausgebildetem Querschnitt verwendet werden und dass die zu bestrahlenden Punkte in einem Abschnitt der jeweiligen Kontaktfeder gewählt werden, die dicker ist als das freie, kontaktgebende Ende der Feder.

13. Vorrichtung zur Durchführung des Verfahrens nach einem der Ansprüche 1 bis 12 gekennzeichnet durch eine Aufnahmevorrichtung (2) zur Positionierung des zu justierenden Relais (1), eine Messeinrichtung (16) zur Abtastung der Position des Ankers (5) und/oder der Kontaktfeder (8) eine erste Vergleichseinrichtung (VG1) zum Vergleich der gemessenen Stellung mit einer gespeicherten Sollstellung (SP1) und zur Bildung eines Abweichungswertes, einen Korrekturwertspeicher (SP2) zur Aufnahme von bestimmten Punkten (21) eines Matrixfeldes zugeordneten Korrekturgrössen, eine zweite Vergleichseinrichtung (VG2) welcher der ermittelte Abweichungswert und die gespeicherten Korrekturgrössen zugeführt

11 0 109 509 12

werden, eine Wärmestrahlungsimpulse erzeugende Einrichtung (14) sowie eine Ablenkungseinrichtung (15), welche in Abhängigkeit von den Ausgangssignalen der zweiten Vergleichseinrichtung auf bestimmte Punkte (21) der zu justierenden Kontaktfeder (8) einstellbar ist.

14. Vorrichtung nach Anspruch 13, dadurch gekennzeichnet, dass die Aufnahmevorrichtung (2) eine Anordnung zur Kontaktierung der Anschlussstifte des Relais (1) enthält.

15. Vorrichtung nach Anspruch 14, dadurch gekennzeichnet, dass eine Schalteinrichtung (S1) vorgesehen ist, welche Spannung an die Erregungswicklung des Relais (1) anlegt, und dass beim Öffnen bzw. Schliessen des Kontaktes der zu justierenden Kontaktfeder (8) die Messeinrichtung (16) auslösbar ist.

16. Vorrichtung nach einem der Ansprüche 13 bis 15, dadurch gekennzeichnet, dass als Messeinrichtung (16) eine Halbleiter-Bildaufnahmeeinrichtung (27, 28, 29) vorgesehen ist, wobei über ein Linsensystem (28) der abzutastende Bereich des Relais auf einen Zeilen-CCD-Sensor abgebildet wird.

17. Vorrichtung nach einem der Ansprüche 13 bis 16, dadurch gekennzeichnet, dass eine Lichtquelle (30) vorgesehen ist, deren Licht während der Abtastung der Anker- bzw. der Kontaktfederstellung durch die Messeinrichtung (16) über Lichtleiterbündel (32; 32a, 32b, 32c) auf die abzutastenden Relaisteile (5, 8) gerichtet ist.

18. Vorrichtung nach einem der Ansprüche 13 bis 17, dadurch gekennzeichnet, dass die Vergleichseinrichtungen (VG1, VG2) und die Speicher (SP1, SP2) durch einen Mikrocomputer gebildet sind.

19. Vorrichtung nach einem der Ansprüche 13 bis 18, dadurch gekennzeichnet, dass zur Wärmeaufbringung auf die einzelnen Punkte (21) des Matrixfeldes (22) ein Pulslasersystem (14) vorgesehen ist, dessen Strahl über ein um zwei Achsen schwenkbares Spiegelsystem (15) auf die einzelnen Punkte des Matrixfeldes einstellbar ist.

20. Vorrichtung nach Anspruch 19, dadurch gekennzeichnet, dass im Strahlengang des Wärmestrahls (13) eine verstellbare Fokussieroptik (34, 34'; 36, 36') angeordnet ist.

21. Vorrichtung nach Anspruch 19 oder 20, dadurch gekennzeichnet, dass zu beiden Seiten der Relais-Aufnahmevorrichtung (2) je ein Spiegel (20, 20') vorgesehen ist und dass im Strahlengang des Laserstrahls (13) eine verstellbare Umlenkeinrichtung (33) vorgesehen ist, durch die der Strahl wahlweise auf den einen oder den anderen Spiegel (20, 20') einstellbar ist.

22. Vorrichtung nach Anspruch 21, dadurch gekennzeichnet, dass die Umlenkeinrichtung (33) ein verschiebbares Prisma mit verspiegelten Seitenflächen aufweist.

23. Vorrichtung nach einem der Ansprüche 13 bis 20, dadurch gekennzeichnet, dass zusätzlich zum Wärmeerzeugungs-Laser (14) ein weiterer Pilotlaser (23) vorgesehen ist, dessen Strahlengang (24) kollinear zum Wärmestrahl (13) liegt, und dass neben der Relaisaufnahmevorrichtung

(2) mindestens ein Lichtempfänger (25, 25') vorgesehen ist, welcher bei bestimmter Reflexion des Messlaserstrahls ein Signal zur Nullpunktsbestimmung für die Ablenkeinrichtung (15) gegenüber der Relaisaufnahmeeinrichtung (2) abgibt.

## Claims

1. A method for adjusting contact springs in a relay, wherein a defined change of position of the respective contact spring is obtained by local, measured application of heat, in particular by means of a laser beam, characterised in that for the individual points of a matrix field (22) selectable on the contact spring surface, the correction values are stored for the contact spring position, which can be obtained during radiation of the points by a pulse of heat of predetermined energy, length and diameter of focus, that the position of the contact spring (8) to be adjusted relative to a theoretical position is measured and its deviation determined, the deviation is compared to the stored correction values, and those correction values selected whose sum most closely corresponds to the deviation and that the matrix points (21) on the contact spring surface which correspond to the selected correction values are controlled by a device which produces the predetermined heat pulse, and exposed to radiation.

2. A method as claimed in Claim 1, characterised in that the position of the contact spring (8) relative to the theoretical position is remeasured following a radiation of the selected points (21), and that correction values are re-selected and the assigned points on the contact spring surface are exposed to radiation if the determined deviation exceeds a predetermined tolerance value.

3. A method as claimed in Claim 1 or 2, characterised in that the individual adjusting points (21) are controlled by optical deflection of the energy beam produced by one single heat source (14).

4. A method as claimed in one of Claims 1 to 3, characterised in that a plurality of contract springs (8, 8') in a relay are controlled by optical deflection of the energy beam (13) produced by a single heat source (14).

5. A method as claimed in one of Claims 1 to 4, characterised in that during the adjusting process a bias is connected to the free end of the contact spring (8) either in the direction of the energy beam or in the opposite direction.

6. A method as claimed in one of Claims 1 to 5, characterised in that the free end of said spring together with assigned other function elements (5) of the relay (1) is detected by an electro-optical recording device (16) in order to measure the contact spring position.

7. A method as claimed in Claim 6, characterised in that the position of the armature (5) at the moment of the opening and/or closure of a contact is respectively analyzed in order to determine the correction value.

8. A method as claimed in Claim 7, charac-

7

terised in that the armature (5) is illuminated by a light flash at the moment of the scanning.

9. A method as claimed in Claim 6, characterised in that in order to determine the correction value the armature (5) is brought into a central position and the relative position of the contact spring (8) to its counter-contact elements (9, 10) is optically measured.

10. A method as claimed in one of Claims 1 to 9, characterised in that in order to position the heat source (14) or an optical deflection device (15), as the case may be, the contour of the contact spring is scanned by a light beam (24) in conjunction with a light receiver (25).

11. A method as claimed in Claim 10, characterised in that the scanning is effected by a pilot laser (23), whose beam is collinear to the beam of a first laser (14), which produces the heat pulses, and has an essentially lower energy than said beam of the first laser.

12. A method as claimed in one of Claims 1 to 11, characterised in that contact springs having a stepped cross-section are used in the relay and that the points which are to be exposed to radiation are selected in a section of the respective contact spring which is thicker than the free, contact-making end of the spring.

13. A device for implementation of the method as claimed in one of Claims 1 to 12, characterised by

a recording device (2) for positioning the relay (1) which is to be adjusted;

a measuring device (16) for scanning the position of the armature (5) and/or the contact spring (8);

a first comparison device (VG1) for comparing the measured position to a stored theoretical position (SP1) and for forming a deviation value;

a correction value store (SP2) for storing correction magnitudes assigned to specific points (21) of a matrix field;

a second comparison device (VG2), to which the determined deviation value and the stored correction magnitudes are supplied;

a device (14) for producing heat radiation pulses with a deflection device (15) which in dependence upon the output signals of the second comparison device can be set to specific points (21) of the contact spring (8) to be adjusted.

14. A device as claimed in Claim 13, characterised in that the recording device (2) comprises an arrangement for contacting the terminal pin of the relay (1).

15. A device as claimed in Claim 14, characterised in that there is provided a switching device (S1) which connects voltage to the energising winding of the relay (1), and that during opening and closing of the contact of the contact spring (8) to be adjusted the measuring device (16) is triggered.

16. A device as claimed in one of Claims 13 to 15, characterised in that a semiconductor image recording device (27, 28, 29) is provided as a measuring device (16), where the region of the relay to be scanned is represented on a linear CCD sensor by means of a lens system (28).

17. A device as claimed in one of Claims 13 to 16, characterised in that there is provided a light source (30), whose light is directed onto the relay components (5, 8) to be scanned by means of photoconductor bundles (32; 32a, 32b, 32c) during the scanning of the armature and the contact spring position by the measuring device (16).

18. A device as claimed in one of Claims 13 to 17, characterised in that the comparison devices (VG1, VG2) and the stores (SP1, SP2) are formed by a microcomputer.

19. A device as claimed in one of Claims 13 to 18, characterised in that for the heat application onto the individual points (21) of the matrix field (22) there is arranged a pulse laser system (14), whose beam is adjustable onto the individual points of the matrix field by means of a reflector system (15) which can be swivelled about two axes.

20. A device as claimed in Claim 19, characterised in that an adjustable focussing lens system (34, 34'; 36, 36') is arranged in the heat beam path (13).

21. A device as claimed in Claim 19 or 20, characterised in that on both sides of the relay recording device (2) a respective reflector (20, 20') is arranged and that in the path of the laser beam (13) an adjustable deflecting device (33) is arranged, by means of which the beam is alternatively adjustable onto the one or the other reflector (20, 20').

22. A device as claimed in Claim 21, characterised in that the deflecting device (33) has a movable prism with mirrored lateral surfaces.

23. A device as claimed in one of Claims 13 to 20, characterised in that in addition to the heat-producing laser (14) there is arranged a further pilot laser (23) whose beam path (24) is collinear to the heat beam (13) and that in addition to the relay recording device (2) there is provided at least one light receiver (25, 25'), which in the case of a specific reflection of the measuring laser beam transmits a signal for determining the zero point for the deflection device (15) relative to the relay recording device (2).

## Revendications

1. Procédé pour ajuster des ressorts de contact dans un relais, une modification définie de la position du ressort respectif de contact étant obte    grâce à un apport local et dosé de chaleur, no.    ment au moyen d'une impulsion laser, caracte     par le fait que pour les différents points d'une zone en torme de matrice (22) pouvant être selectionnée sur la surface des ressorts de contact, on mémorise les valeurs de correction pouvant être obtenues lors de l'irradiation de ces points avec une impulsion de chaleur dans le cas d'une énergie et d'une durée d'impulsion predeterminee et d'un diametre predetermine au foyer, pour la position des ressorts de contact, qu'on mesure la position

du ressort de contact (8) devant être ajusté par comparaison à une valeur de consigne et qu'on détermine l'écart de position, qu'on compare cet écart aux valeurs de correction mémorisées et qu'on choisit les valeurs de correction dont la somme correspond au maximum à l'écart, et qu'on commande et on irradie les points (21) de la matrice, qui correspondent aux valeurs de correction sélectionnées, sur la surface du ressort de contact, avec un dispositif produisant une impulsion de chaleur prédéterminée.

2. Procédé suivant la revendication 1, caractérisé par le fait qu'après une irradiation des points (21) sélectionnés, on mesure à nouveau la position du ressort de contact (8) par rapport à la position de consigne et qu'on sélectionne à nouveau des valeurs de correction et qu'on irradie les points associés sur la surface du ressort de contact lorsque l'écart déterminé dépasse une valeur de tolérance prédéterminée.

3. Procédé suivant la revendication 1 ou 2, caractérisé par le fait que les différents points d'ajustement (21) sont commandés au moyen d'une déviation optique du faisceau d'énergie produit par une source de chaleur unique (14).

4. Procédé suivant l'une des revendications 1 à 3, caractérisé par le fait que l'on commande plusieurs ressorts de contact (8, 8') situés dans un relais au moyen d'une déviation optique du faisceau d'énergie (13) produit par une source de chaleur unique (14).

5. Procédé suivant l'une des revendications 1 à 4, caractérisé par le fait que pendant le processus d'ajustement une précontrainte est appliquée à l'extrémité libre du ressort de contact (8), dans la direction du faisceau d'énergie ou bien dans la direction opposée.

6. Procédé suivant l'une des revendications 1 à 5, caractérisé par le fait que pour réaliser la mesure de la position des ressorts de contact, on détecte leur extrémité libre ainsi que d'autres éléments fonctionnels associés (5) du relais (1), par l'intermédiaire d'un dispositif d'enregistrement électro-optique (16).

7. Procédé suivant la revendication 6, caractérisé par le fait que pour déterminer la valeur de correction, on évalue respectivement la position de l'armature (5) à l'instant de l'ouverture et/ou de la fermeture d'un contact.

8. Procédé suivant la revendication 7, caractérisé par le fait qu'on éclaire au moyen d'un éclair de lumière l'armature (5) à l'instant d'exploration.

9. Procédé suivant la revendication 6, caractérisé par le fait que pour déterminer la valeur de correction, on amène respectivement l'armature (5) dans une position médiane, puis on mesure optiquement la position relative des ressorts de contact (8) par rapport à leurs éléments de contact antagonistes (9, 10).

10. Procédé suivant l'une des revendications 1 à 9, caractérisé par le fait que pour positionner la source de chaleur (14) ou bien un dispositif optique de déviation (15), on explore le contour du ressort de contact avec un faisceau lumineux (24) en liaison avec un récepteur de lumière (25).

11. Procédé suivant la revendication 10, caractérisé par le fait que pour l'exploration, on utilise un laser pilote (23) dont le faisceau est colinéaire avec le faisceau d'un premier laser (14) produisant des impulsions de chaleur et possède une énergie nettement plus faible que ce dernier.

12. Procédé suivant l'une des revendications 1 à 11, caractérisé par le fait que dans le relais on utilise des ressorts de contact possédant une section transversale de forme étagée et que les points devant être irradiés sont choisis dans une section du ressort de contact respectif, qui est plus épaisse que l'extrémité libre du ressort, qui établit le contact.

13. Dispositif pour la mise en œuvre du procédé suivant l'une des revendications 1 à 12, caractérisé par:

– un dispositif récepteur (2) servant à positionner le relais (1) devant être ajusté,

– un dispositif de mesure (16) servant à explorer la position de l'armature (5) et/ou des ressorts de contact (8),

– un premier dispositif comparateur (VG1) servant à comparer la position mesurée à une position de consigne mémorisée (SP1) et à former une valeur d'écart,

– une mémoire (SP2) de valeurs de correction servant à l'enregistrement de grandeurs de correction associées à des points déterminés (21) d'une zone en forme de matrice,

– un second dispositif comparateur (VG2) auquel sont envoyées la valeur d'écart déterminée et les grandeurs de correction mémorisées,

– un dispositif (4) produisant des impulsions de rayonnement de chaleur ainsi qu'un dispositif de déviation (15) qui est réglable en fonction des signaux de sortie du second dispositif comparateur sur des points déterminés (21) des ressorts de contact (8) devant être ajustés.

14. Dispositif suivant la revendication 13, caractérisé par le fait que le dispositif récepteur (2) contient un dispositif servant à contacter les broches de raccordement du relais (1).

15. Dispositif suivant la revendication 14, caractérisé par le fait qu'il est prévu un dispositif de commutation (S1) qui applique une tension à l'enroulement d'excitation du relais (1) et que, lors de l'ouverture ou de la fermeture du contact du ressort de contact (8) devant être ajusté, le dispositif de mesure (16) peut être déclenché.

16. Dispositif suivant l'une des revendications 13 à 15, caractérisé par le fait qu'il est prévu comme dispositif de mesure (16) un dispositif d'enregistrement d'images à semi-conducteurs (27, 28, 29), l'image de la zone devant être explorée du relais étant formée par un système à lentille (28) sur un capteur linéaire (CCD).

17. Dispositif suivant l'une des revendications 13 à 16, caractérisé par le fait qu'il est prévu une source de lumière (30) dont la lumière est dirigée par le dispositif de mesure (16) par l'intermédiaire de faisceaux de guides de lumière (32; 32a, 32b, 32c) sur les éléments (5, 8) devant être explorés du relais, pendant l'exploration de la position de l'armature ou des ressorts de contact.

18. Dispositif suivant l'une des revendications 13 à 17, caractérisé par le fait que les dispositifs comparateurs (VG1, VG2) et les mémoires (SP1, SP2) sont formés par un micro-ordinateur.

19. Dispositif suivant l'une des revendications 13 à 18, caractérisé par le fait que pour l'apport de chaleur aux différents points (21) de la zone en forme de matrice (22) il est prévu un système laser à impulsions (14), dont le faisceau peut être réglable sur les différents points de la zone en forme de matrice par l'intermédiaire d'un système de miroirs (15) pouvant pivoter autour de deux axes.

20. Dispositif suivant la revendication 19, caractérisé par le fait qu'un système optique réglable de focalisation (34, 34'; 36, 36') est disposé sur le trajet du faisceau de chaleur (13).

21. Dispositif suivant la revendication 19 ou 20, caractérisé par le fait qu'il est prévu un miroir (20, 29) des deux côtés du dispositif (2) d'enregistrement du relais et que sur le trajet du faisceau laser (13) il est prévu un dispositif réglable de déviation (33), à l'aide duquel le faisceau est réglable au choix sur l'un ou sur l'autre des miroirs (20, 20').

22. Dispositif suivant la revendication 21, caractérisé par le fait que le dispositif de déviation (33) comporte un prisme déplaçable muni de surfaces latérales métallisées.

23. Dispositif suivant l'une des revendications 13 à 20, caractérisé par le fait qu'il est prévu, en plus du laser (14) de production de chaleur, un autre laser pilote (23) dont le trajet du faisceau (24) est colinéaire avec le faisceau de chaleur (13) et qu'à côté du dispositif récepteur (2) du relais il est prévu au moins un récepteur de lumière (25, 25') qui, dans le cas d'une réflexion déterminée du faisceau laser de mesure, délivre un signal pour déterminer le zéro pour le dispositif de déviation (15) par rapport au dispositif récepteur (2) du relais.

# FIG 1

FIG 2

Diode NR. 1........1024

0 109 509

FIG 3

FIG 4

FIG 5

FIG 6

FIG 7

FIG 8

FIG 9

## FIG 10

## FIG 11